Europäisches Patentamt

European Patent Office

Office européen des brevets

(19)

(11) Publication number: **0 098 657**
**A1**

(12) # EUROPEAN PATENT APPLICATION

(21) Application number: **83200977.3**

(22) Date of filing: **30.06.83**

(51) Int. Cl.³: **B 62 D 37/04,** F 16 F 7/10,
E 04 B 1/98, E 04 H 12/00,
E 01 F 7/06, B 63 B 39/02

(30) Priority: **02.07.82 NL 8202673**

(43) Date of publication of application: **18.01.84**
**Bulletin 84/3**

(84) Designated Contracting States: **AT BE CH DE FR GB IT
LI LU NL SE**

(71) Applicant: **Nagron Steel and Aluminium B.V., 1a Dr.
Langemeyerweg, NL-6991 EV Rheden (NL)**

(72) Inventor: **Bertels, Augustinus Wilhelmus Maria, 10, Van
Westhreenelaan, NL-6815 AC Arnhem (NL)**

(74) Representative: **Schumann, Bernard Herman Johan et
al, OCTROOIBUREAU ARNOLD & SIEDSMA
Sweelinckplein 1, NL-2517 GK The Hague (NL)**

(54) **Stabilized system having an Eigen-frequency.**

(57) The invention relates to a system having at least one Eigen-frequency comprising at least one first mass (65) urged by first spring means to a state of equilibrium or correspondingly arranged analogs thereof, provided with stabilizing means. Such a system may be mechanical, electrical, electronic, acoustic or combinations thereof. The analogy between such system is the corresponding form of the differential equations describing the system.

The invention has for its object to avoid undesirable excitation on one or more Eigen-frequencies or at least to limit such excitation to an extent such that a satisfactory control of resonance phenomena is obtained.

For this purpose the invention provides a system in which the stabilizing means are designed in the form of at least one second mass (70) or correspondingly arranged analogs thereof arranged at the first mass (65) or at least one of the first masses and urged by second spring means (73, 74) to a state of equilibrium thereof. Very statisfactory results are obtained by the embodiment in which the stabilizing means have at least one Eigen-frequency which appreciably exceeds the or one Eigen-frequency of the system. In a preferred embodiment the stabilizing means are coupled with the system through leverages or analogs thereof. The stabilizing means preferably have little dissipation.

EP 0 098 657 A1

X Sch/gn/2

-1-
## Stabilized system having an Eigen-frequency

The invention relates to a system having at least one Eigen-frequency comprising at least one first mass urged by first spring means to a state of equilibrium or correspondingly arranged analogs thereof, provided with stabilizing means. Such a system may be mechanical, electrical, electronic, acoustic or combinations thereof. The analogy between such systems is the corresponding form of the differential equations describing the system.

An example of a system embodying the invention is a caravan intended to be towed by means of a pivotable coupling by a motor vehicle, e.g. an automobile, and provided with stabilizing means for suppressing relative rotation and translation of the trailer and the motor vehicle. In this known trailer the stabilizing means are designed in the form of damping device with resistance elements on the basis of friction or viscous damping. Such damping devices are coupled between the prime mover and the trailer at a given lateral distance from the pivotable draw coupling between the two. It is obvious that in coupling and decoupling the damping devices concerned also have to be engaged and disengaged. It is noted that both the motor vehicle and the trailer have to be provided with means for attaching the damping devices.

-2-

Needless to say that these additional coupling points have to be of excellent quality. For reasons of cost this may be a drawback.

The great disadvantage of the known technique is that the trailer is stabilized at the expense of the stability of the motor vehicle. The stability tolerance of the motor vehicle is reduced. Therefore, the combination as such may be conceived to be stabilized up to a given maximum speed. Strictly speaking, the speed of disturbances has to be taken into account. In practice it appears that this speed is correlated in a reasonably predictable manner with the travelling speed. In the event of very rapid disturbances such as abrupt rotations in sharp bends the coupling exhibits strong stiffening. After a gradual overtaken mavoeuver the driver may desire to rapidly steer in the other direction. This high speed of disturbance is found to hinder the steering behaviour. In practice this may give rise to extremely dangerous situations.

Also in view of the foregoing the legislation of various countries fix a maximum permissible moment about the coupling point. This may be of the order of magnitude of 200 Nm. Such a legal provision limits, of course, the stabilizing possibilities of this type.

A further example is a train of plurality of carriages, which may readily get into anti-resonance, which is highly disagreeable for the passengers and may give rise to hazardous situations.

A further example is the roll and pitch of a ship.

A still further example is a windmill carried by a mast, a traffic board or the like having several degrees of freedom of corresponding Eigen-frequencies.

A different example is a crank shaft with a fly-wheel, for which it is know that due to the relatively great torsion compliance fairly serious resonance phenomena may occur.

With respect to the above-mentioned examples and comparable systems the invention has for its object to avoid undesirable excitation on one or more Eigen-freuqencies or at least to limit such excitation to an extent such that a

-3-

satisfactory control of resonance phenomena is obtained.

For this purpose the invention provides a system in which the stabilizing means are designed in the form of at least one second mass or correspondingly arranged analogs thereof arranged at the first mass or at least one of the first masses and urged by second spring means to a state of equilibrium thereof. Very statisfactory results are obtained by the embodiment in which the stabilizing means have at least one Eigen-frequency which appreciably exceeds the or one Eigen-frequency of the system. In a preferred embodiment the stabilizing means are coupled with the system through leverages or analogs thereof. The stabilizing means preferably have little dissipation.

The invention furthermore provides a trailer of the kind set forth in the preamble in which the stabilizing means are formed by a mass movably arranged on the trailer and urged by spring means to a state of equilibrium. For example, the mass may be laterally and linearly displaceable, for example, slidable. However, preferably the mass is displaceable along a curved line, since it has been found that it is not the place of the pivotal point which is unambiguously determinative of the "effective disposition" of the displaceable mass because due to the swinging movements of the motor vehicle itself the pivotal point is not a stationary point, but exhibits a varying position.

A simple embodiment is that in which the mass comprises at least one mass element arranged at the free end of a pivotable rod.

The mass may have the form of a fly-wheel.

In the case in which the mass is rotatably movable the spring means may comprise one or more helical springs. For example, there may be provided two helical springs directed in opposite senses. In this way satisfactory symmetry is ensured.

As an alternatice the spring means may comprise at least two linear springs acting in relatively opposite senses.

A very simple variant is that in which the mass is carried solely by the spring means.

-4-

A very important advantage of the stabilizing means according to the invention is that they may be added to the trailer once for all and that additional means and manipulations for engagement and disengagement are no longer required. The stabilizing means can be adapted to the dynamic properties of the trailer. In accordance with the invention the stabilizing means can be easily arranged in a dust- en dirt-proof manner so that maintenance is not required for the entire lifetime. It may furthermore be a great advantage that legal provisions, if any, relating to the maximum permissible eccentric torque do not apply to the technique in accordance with the invention.

As stated above, it may be preferred to cause the mass to follow a curved path. Extremely satisfying results have been obtained by embodiments in which the centre(s) of curvature of the path of the mass is (are) located between the motor vehicle and the mass. In other words: the direction of the curve of the path concerned corresponds to the swinging movement of the trailer, which is mainly a rotary movement.

It should be noted that by applying the invention only a relatively small mass need be added to the trailer. It is conceivable, for example, to use an additional mass of about 5 to 8% of the mass of the trailer. By correct proportioning such a relatively light-weight mass can provide a sufficient effect.

In this respect it should be noted that the path to be followed by the mass may be as far as possible to the rear in order to obtain the largest possible inertia moment.

From simulations and experiments with models to scale it has been found that the invention provides a considerable extension of the stable range and that within said range the attenuation of disturbances has improved at the least by a factor 2 to 3 and even up to 5 to 6 for higher speeds.

With respect to the further examples it should also be noted that the effectivity of the dynamic stabilization increases, the larger is the distance of the movable mass from the pivotal point. For example, the movable mass

-5-

concerned in a train should be arranged near the ceiling. In the case of a mast carrying a mass at its free end the stabilizing means should be arranged near said mass.

An example of an analogous representation of a mechanical second-order system as the caravan mentioned above consisting of a mass or, as the case may be, inertia moment, position-recovering spring means such as the tracking forces produced by the wheels and, as the case may be, tyre and aerodynamic damping, is an electric circuit comprising an inductor, a capacitor and a resistor.

A last example is a system for regulating a periodically changing force or speed or analogs thereof. Such a system may be an electricity distribution mains. It is known that such a system, in particular a three-phase system, is often subjected to distortion by third-order harmonics, for a 50 Hz mains therefore an undesirable excitation to a frequency of 150 Hz. The invention has for its object in the case of such a system to design the stabilizing means in a manner such that at least substantially without dissipation the third-order harmonic is suppressed. For such systems the invention provides, in general, means for exerting a force on the stabilizing means or for imposing a speed or analogs thereof in synchronism with and with phase coupling with respect to the force or speed or analogs thereof to be regulated. It has been found that in such a system, without using sophisticated or dissipating filter networks, excellent effectivity is obtained at low cost.

The invention will now be described more fully with reference to a drawing showing a few arbitrarily chosen embodiments. The drawing shows in:

Fig. 1 a schematic representation of an undamped pendulum;

Fig. 1b the deflection as a function of time;

Fig. 2a a schematic representation of a pendulum damped by a friction damper;

Fig. 2b a graphic representation of the deflection thereof as a function of time;

Fig 3a a schematic representation of a pendulum with a dynamic stabilizer;

Fig. 3b a graphic representation of the deflection thereof as a function of time;

Fig. 4 a schematic representation of a first embodiment of the invention;

Fig. 5 a schematic representation of a second embodiment;

Fig. 6 a schematic representation of a third embodiment;

Fig. 7 a schematic representation of a fourth embodiment;

Fig. 8a a graphic representation of a deflection of a dynamically stabilized system as a function of time if a first setting;

Fig. 8b a graphic representation corresponding with fig. 8a of a friction-stabilized system;

Fig. 9a a graphic representation of the deflection of a dynamically stabilized system as a function of time in a second setting;

Fig. 9b a graphic representation corresponding with fig. 8b;

Fig. 10 a graph for illustrating the difference between a friction-stabilized and a dynamically stabilized system;

Fig. 11 a fragmentary, perspective view of a fifth embodiment of the invention;

Fig. 12 a fragmentary, perspective view corresponding with fig. 11 of a sixth embodiment of the invention;

Fig. 13 a schematic cross-sectional view of a seventh embodiment;

Fig. 14 a schematic cross-sectional view of the embodiment of fig. 13;

Fig. 15 a schematic side elevation of a train with stabilizing means in accordance with the invention;

Fig. 16 a plan view corresponding with fig. 15;

Fig. 17 a cross-sectional view of the train shown in figs. 15 and 16 on an enlarged scale;

Fig. 18 a ship having stabilizing means in accordance with the invention;

Fig. 19 a schematic side-elevation of the ship of fig. 18;

Fig. 20 a windmill having stabilizing means in accordance with the invention;

Fig. 21 a traffic board on a post with stabilizing means embodying the invention;

Fig. 22 a crank shaft with a small fly-wheel and stabilizing means embodying the invention;

Fig. 23 a drastically simplified electric analog of a drawn trailer;

Fig. 24 the analog of fig. 23 to which stabilizing means embodying the invention are added;

Fig. 25 an alternating-current distribution mains with means for regulating the amplitude and suppressing harmonic deformation;

Fig. 26 a rectifying circuit arrangement with means for regulating the amplitude of the output voltage;

Fig. 27 a detail of a further mechanical embodiment in a perspective view partly broken away;

Fig. 28a, 28b and 28c graphs of the horizontal deflection (angle) of a caravan relative to its direction of movement, the deflection (angle) of the stabilizing mass, and the force exerted on the stabilizing spring, respectively;

Fig. 29a, 29b and 29c corresponding graphs of the case in which spring stiffness is reduced by a factor 10; and

Fig. 30a, 30b and 30c corresponding graphs of the case in which spring stiffness is reduced by a factor 2000.

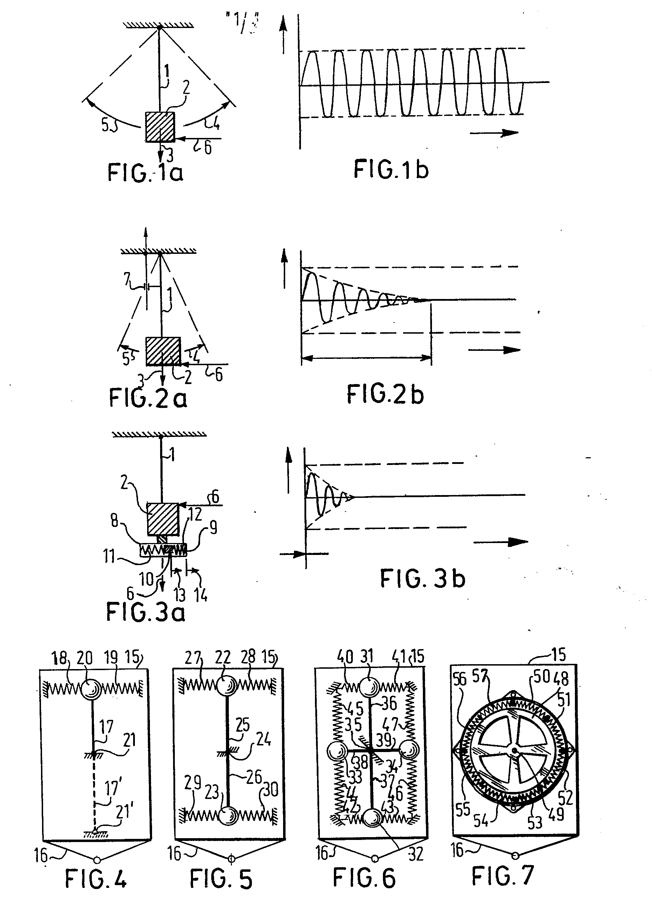

Fig. 1a shows a mass 2 suspended to a rod 1 of a length 1. The force of weight 3 drives in known manner the mass 2 back into the state of equilibrium shown. The arrows 4, 5 indicate the positive and negative deflection. Arrow 6 corresponds to an imparted force.

By exerting a thrust on the mass 2 the mass 2 starts swinging.

Fig. 2 shows a graph of the deflection as a function of time. From fig. 1b it is clearly apparent that, as is generally known, the mass 2 performs a harmonic oscillation around the state of equilibrium. It is clear that the curve

-8-

of fig. 1b thus has a sinusoidal shape.

Fig. 1a shows the same mass 2 in suspended position. In this case the movement of the mass 2 is damped by a friction damper 7 shown schematically, which brings about a counter-force on the mass 2.

Fig. 2b shows the deflection as a function of time of the damped oscillation system of fig. 2a. It is noted here that the effectivity of the damping action can be expressed as an amplitude ratio between successive deflection maxima and is dependent of the amount of friction occurring in the damper 7.

The examples of figs. 1 and 2 are simple models of a trailer towed by an automobile without and with stabilizing means, respectively.

Fig. 3a shows a corresponding model of a trailer drawn by a motor vehicle provided with stabilizing means according to the invention. These stabilizing means 8 are formed by a tube 9 coupled with the mass 2, in which tube a mass 10 is displaceable in a direction of length, said mass 10 being urged by two springs 11, 12 to the intermediate position. By exerting a thrust on the mass 2 in the direction indicated by the arrow 6 the mass 10 attains a speed 3 so that via the springs 11, 12 a counter-force 14 is exerted on the tube 9 and hence on the mass 2.

Fig. 3b is a graphic representation of the deflection of the mass 2 as a function of time of the system shown in fig. 3a. It is apparent that in this system corresponding to a trailer stabilized in accordance with the invention a very satisfactory stabilization can be obtained without the need for exerting a torque on the mass 2.

Fig. 4 is a schematic representation of a practical implementation of the principle illustrated in fig. 3a. A trailer 15 with a drawbar 16 is provided with a mass 20 arranged at the end of a rod 17 and urged by springs 18, 19 into the medium position. The rod 17 is fastened approximately in the middle of the trailer 15 to a hinge 21. It is noted that the hinge point 21 may have a different place to which the length of the rod 17 can be adapted. By way of example, the broken lines represent a hinge 21' and a rod 17'. Other positions and lengths depend on weights, weight distributions and inertia moments.

Fig. 5 shows an example in which two masses 22, 23 are arranged on the rear side and at the front respectively of the trailer so as to be pivotable about a hinge 24. The mass 22 is carried by a rod 25. The mass 23 is carried by a rod 26. Springs 27, 28 and 29, 30 respectively urge the masses 22 and 23 into the middle position.

Fig. 6 shows a third example. Herein four masses 31, 32, 33, 34 are carried by rods 36, 37, 38 and 39 respectively, adapted to move about a hinge 35, said masses being urged by springs 40, 41, 42, 43, 44, 45, 46, 47 respectively into their respective middle positions.

Fig. 7 shows a fourth embodiment of the invention in which a fly-wheel 48 is rotatable about a shaft 49, the periphery of said fly-wheel being in engagement with springs 50, 51, 52, 53, 54, 55, 56, 57. At the other end the springs 50 to 57 are in engagement with the trailer 15.

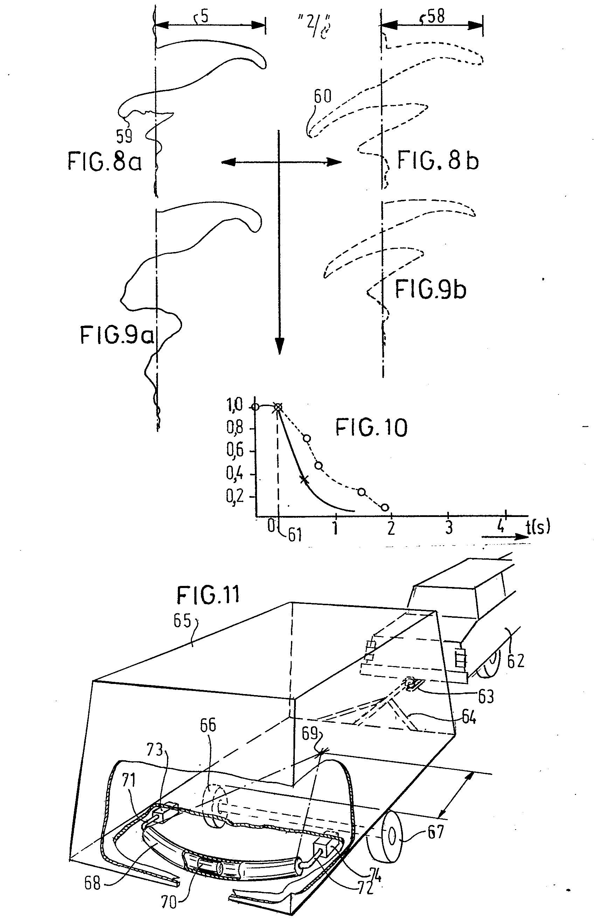

Figs. 8 and 9 show graphs of the deflections of models to scale as a function of time plotted by means of a stylus movable along a curved path. The deflection is plotted in a horizontal direction. The time is plotted vertically down on the ordinate.

Fig. 8a relates to a system having a simple dynamic stabilizer in a first setting. A deflection 58 is imparted. From the response indicated by the graph it appears that already at the first deflection designated for the sake of clarity by reference numeral 59 in a negative direction appreciable damping has occurred.

Comparing this result with the response shown in fig. 8b of a friction-stabilized system it appears that in the first negative deflection designated by reference numeral 60 of the system stabilized in accordance with the prior art the amplitude is considerably larger.

Not only a comparison between the deflections 59 and 60 but also the further course of the curves of figs. 8a and 8b provides an analogous picture.

-10-

Fig. 9a shows a graph corresponding to fig. 8a of a system stabilized in accordance with the invention in a second setting.

Fig. 9b illustrates the response of a system stabilized in accordance with the prior art.

From the comparison between figs. 9a and 9b it appears that in the second setting the system embodying the invention has a longer decay time, but that the amplitude of the decaying oscillations is considerably smaller than that of the known system of fig. 9b.

Fig. 10 shows a comparison of the decay behaviour of a dynamically stabilized system according to the invention with a friction-stabilized system embodying the prior art. On the ordinate is plotted the normalized amplitude (i.e. the amplitude of a maximum deflection divided by the initial deflection). The time is plotted on the abscissa. It will be apparent that the damping is more effective the larger is the decrement or else the faster turns the curve. The measuring points indicated by circles, which are connected by an interrupted curve, relate to a known friction-damped system. The solid curve relates to a dynamically stabilized system embodying the invention. As from an instant indicated by 61 an imparted oscillation terminated, after which the system is left to itself. Without further explanation it will be obvious that the invention is far superior to the prior art.

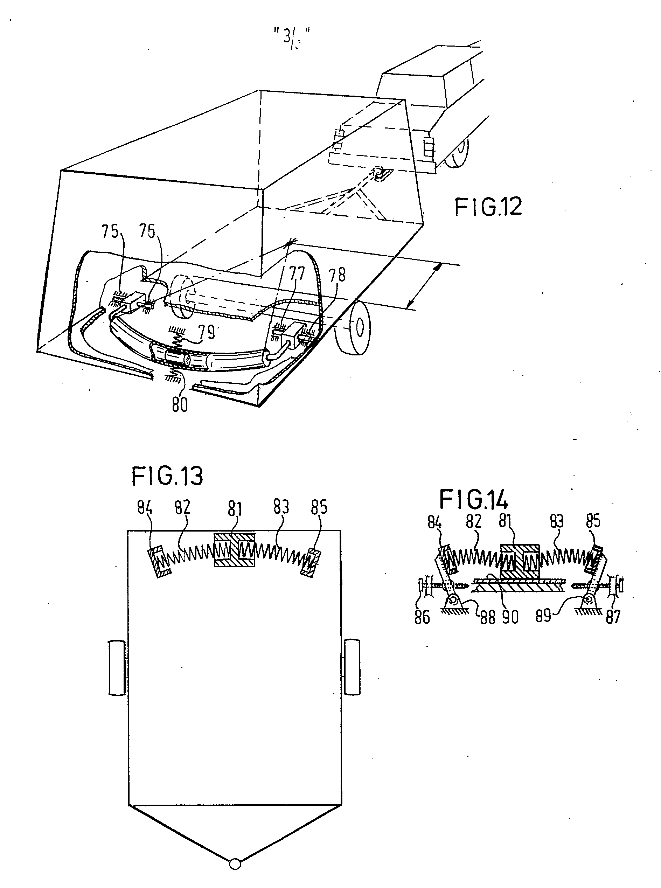

Fig. 11 shows a caravan 65 drawn by a car 62 by means of a drawhook 63 and a drawbar 64. Approximately midway are arranged wheels 66 and 67. Viewed in the direction of travel a curved tube 68 is arranged behind the wheels 66, 67, the centre of curvature 69 of said tube being located in front of the wheels 66, 67, viewed in the direction of travel, whilst a mass 70 is movable in said tube. With the ends of the completely closed tube 68 communicate spaces 73, 74 through ducts 71, 72. The mass 70 is urged to it middle position by the air on the left and right thereof, which operates like a spring. For this purpose the mass 70 is along its circumference in sealing relationship with the interior of the tube 68. The additional air volumes 72 and 74 serve to ensure that the rigidities of the "air springs" on both sides of the mass remain substantially constant near the ends of the tube.

Fig. 12 shows a car and a caravan fully corresponding with those of fig. 11 with the exception that the tube 68 is carried by rotary bearings 75 to 78 and is urged into a state of equilibrium by springs 79, 80 in the middle. By this additional degree of freedom of the stabilizing means a satisfactory immunity is obtained against upward and downward movements of the rear side of the caravan which may be oscillations around the axle of the wheels 66, 67 and/or around a different centre of movement, for example, the drawhook 63.

Fig. 13 shows a caravan the stabilizing means of which are formed by a mass 81 which is urged into a state of equilibrium by two springs 82, 83, the other ends of which are held in position by positioning members 84, 85, whose inner face cooperating with the springs 82, 83 is slightly inclined to the longitudinal axis of the caravan so that the weight 81 can perform a movement along a curved path.

Fig. 14 illustrates how by means of set screws 86, 87 the point of application of the springs 82, 83 and hence their effective rigidity can be regulated. It is noted that by the angular turn of the positioning members 84, 85 around the pivotal pin 88, 89 the springs tend, by their dependent curvature, to cause the weight 81 to bear more or less heavily on the sliding surface 90 along which the weight 81 can slide with its surface. By means of the set screws 86, 87 excellent adaption to the properties of the combination to be stabilized can be achieved within wide limits.

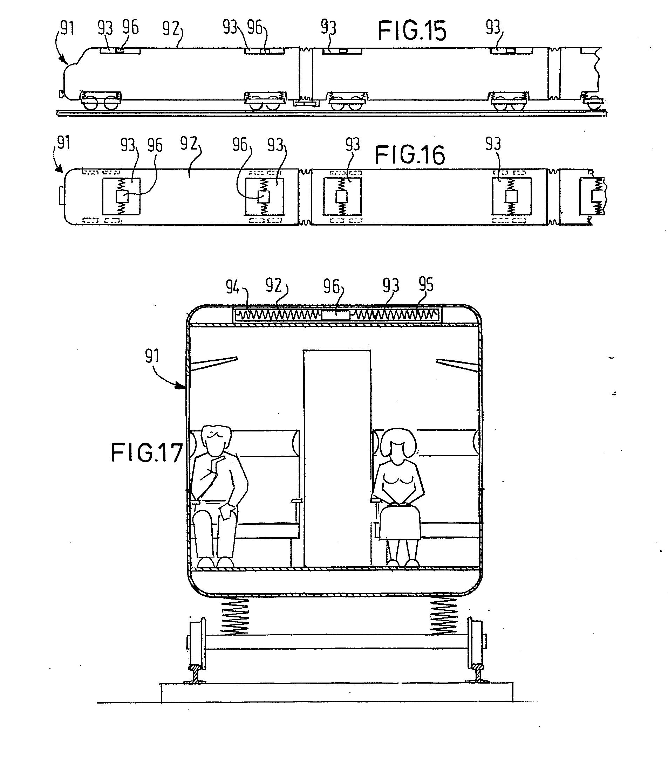

Fig. 15, 16 and 17 show a train 91 in which stabilizing devices are arranged near the roof 92. These stabilizing devices comprise slidable masses 96 urged into a state of equilibrium by springs 94, 95.

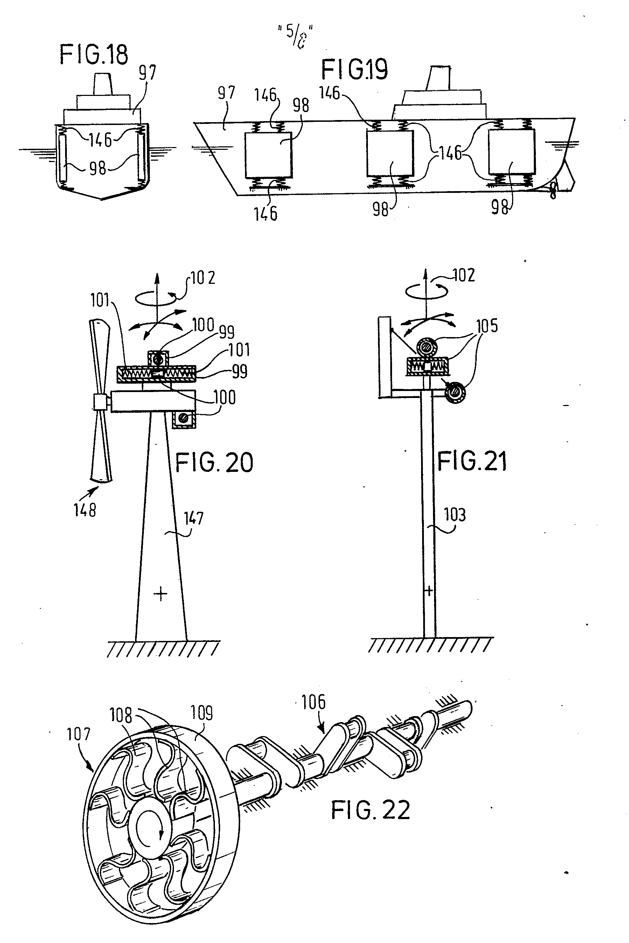

Figs. 18 and 19 show a ship 97 with masses 98 suspended in springs 146 and arranged near the sidewalls of the ship.

Fig. 20 shows a windmill 148 carried by a mast 147 and being provided with three mutually perpendicularly arranged

-12-

stabilizing devices embodying the invention comprising masses 100 slidably arranged in tubes 99 and urges to a state of equilibrium by springs 101. The set of arrows 102 symbolically indicates which oscillations can be compensated by this construction.

Fig. 21 shows in a general sense the same construction as fig. 20 but applied to a traffic board 104 carried by a post 103. In this case round tubes 105 are used.

Fig. 22 shows a crank shaft 106 with a stabilizing device 107 according to the invention, which takes the place of the conventional fly-wheel. This stabilizing device 107 comprises a plurality of S-shaped spring blades 108 extending in a substantially radial direction and supporting an annular mass 109. By this stabilizing device 107 troublesome crank shaft resonances are very effectively compensated.

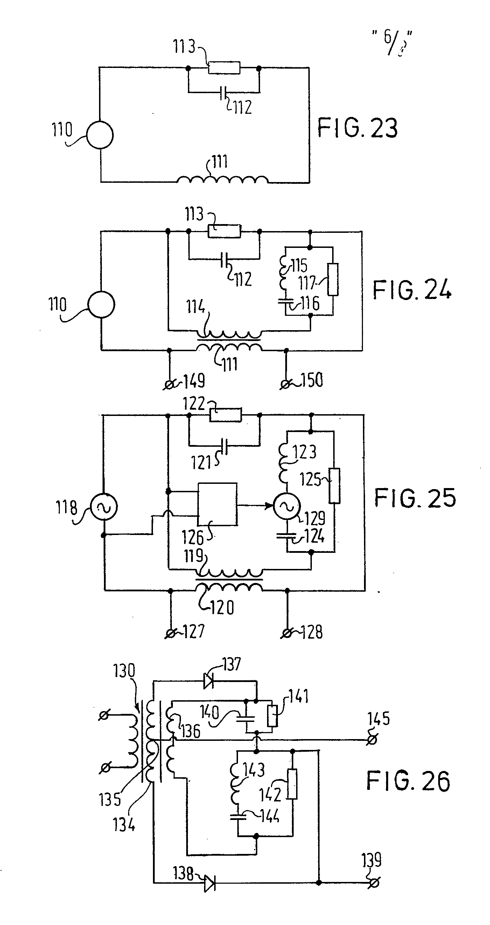

Fig. 23 shows a drastically simplified electric analog of a trailer which can be excited to an Eigen-frequency by more or less irregular disturbances. The source of interference is symbolically represented by a voltage source 110. The effective mass is represented as an inertia by an inductor 111, the spring(s) urging the mass into a state of equilibrium by a capacitor 112 and the damping, for example by friction, by a resistor 113. In practice the resistor 113 has a high value as a result of which the quality factor of the LRC-circuit is high and unstabilities may readily occur.

Fig. 24 shows an analog applying to a trailer having stabilizing means embodying the invention. Clearly recognizable are the inductor 111, the capacitor 112 and the resistor 113 as shown in fig. 23. The stabilizing means embodying the invention are constructed in the form of a transformer 114, the primary winding of which is the inductor 11 with connecting terminals 149, 150. An LRC-circuit comprising an inductor 115 (mass or inertia moment), a capacitor 116 (spring means) and a resistor 117 (damping, dissipation) constitues the stabilizing means in a narrower sense.

The stabilized voltage can be derived between the terminals 149, 150. This voltage corresponds to the variation of deflection in time as is indicated by way of example in figs. 8a and 9a.

For the explanation of fig. 24 reference is made to fig. 3a. The mass 2 corresponds to the inductor 111, the capacitor 112 corresponds to the activity of the repelling force of gravity, the resistor 113 is the damping of movement due to friction at the point of suspension and any viscous damping due to movement in air. The transformer 114 has a winding ratio which corresponds to the effective distance between the point of suspension and the centre of the mass 2 and, respectively, the distance between the point of suspension and the effective mass of the stabilizing means 8, the inductor 115 corresponds to the mass 10, the capacitor 116 to the activity of the springs 11, 12 and the resistor 117 to the damping mainly by friction of the mass 10 inside the tube 9.

It is emphasized that in the analog of fig. 24 the resistor 117 has a high value. This means that the stabilizing means exhibit low damping and low dissipation. It is found that in this way undesirable oscillations of the main system can be very effectively compensated.

Fig. 25 shows a distribution mains represented here by an alternating voltage source 118. This distribution mains provides an alternating voltage of substantially constant frequency, for example 50 Hz. In practice it is found that amplitude fluctuations and distortion mainly due to third harmonics are frequently occurring. The circuit arrangement of fig. 25 is designed for regulating the alternating voltage supplied by the source 118. It will be apparent that the circuit arrangement of fig. 25 has a structure strongly suggesting the arrangement of fig. 24. These is a transformer 119, the primary winding 120 of which has a predetermined inductance which is connected in series with a parallel circuit of a capacitor 121 and a resistor 122. The secondary winding 119 is connected to a compensation circuit comprising an inductor 123, a capacitor 124 and a resistor 125 connected in parallel to the circuit 123, 124. The circuit 123, 124

-14-

furthermore comprises an alternating voltage source 125, which has a phase coupling with the voltage source 118 through a control unit 126. By this configuration a satisfactory regulation of the voltage emanating from the source 118 is obtained, whilst in addition the harmonic distortions can be reduced to harmless proportions. The output voltage can be obtained from terminals 127, 128.

Fig. 26 shows a rectifying circuit comprising a transformer 130 having a primary winding 131 with connecting terminals 132, 133, a first secondary winding 134 with central tapping 135 and a second secondary winding 136 with predetermined inductance. To the ends of the first secondary winding 134 are connected two diodes 137, 138. The diode 138 leads to a first connecting terminal 139. The diode 137 is connected to one end of the second secondary winding 136 and to the parallel combination of a capacitor 140 and a resistor 141, the other end of which is connected to the parallel combination of a resistor 142 and a series circuit comprising an inductor 143 and a capacitor 144. The other end of the resistor 142 and the capacitor 144 is connected to the other terminal of the second secondary winding 136. The central tapping 135 leads to a second connecting terminal 145. A two-phase, rectified, stabilized direct voltage can be obtained from the terminals 145 and 139.

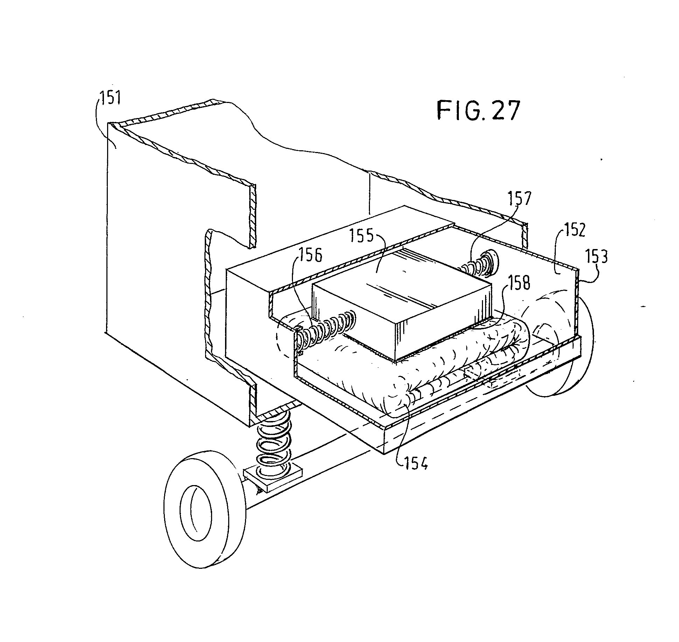

Fig. 27 shows a caravan 151 in partly broken away perspective view. The caravan 151 comprises stabilizing means 152 consisting of a housing 153 in which a cushion 154 filled with viscous fluid is accomodated supporting a mass 155 loaded by springs 156, 157.

As can be clearly seen in this fig. 27 the cushion 154 has a flattened annular shape, due to which shape it is adapted to roll in a very well controllable and predictable manner. The damping provided by this special cushion can be chosen on basis of special requirements. E.g. the viscosity of the filling fluid and the amount of such fluid are determining the effective viscous damping of the movements of the stabilizing mass 155. This special construction does not require the use of any mechanical guiding means and does not have any mechanical friction, which, as is well known, has strongly non-linear properties. Furthermore this construction is very cheap.

The mass 55 is, in this embodiment formed as a block of bitumen filled with chippings.

Needless to say that at the contact surface 158 between the cushion 154 and the mass 155 the mass 155 is adhered to the cushion 154 by any suitable means, e.g. adhesives or the like.

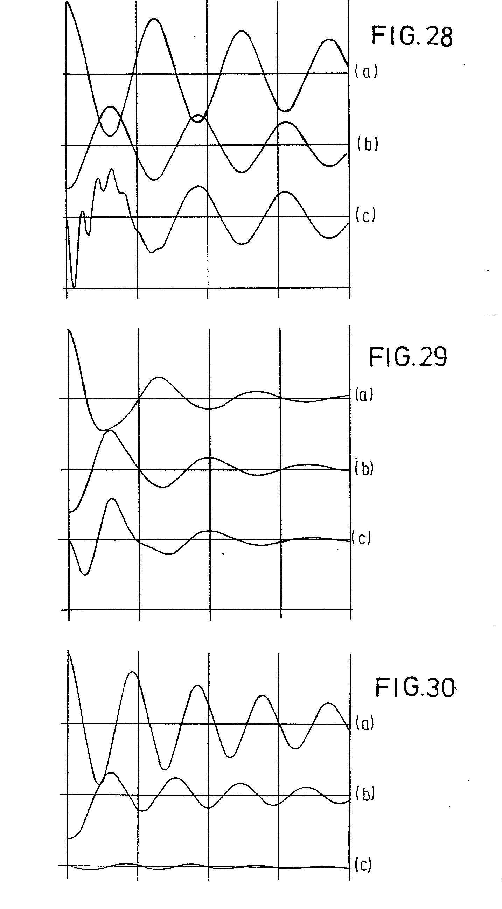

Fig. 28 shows under (a) a graph of the horizontal deflection of a caravan relative to its direction of movement; under (b) the deflection angle of the stabilizing mass and under (c) the force exerted on the stabilizing springs. It will be seen from this fig. 28 that the damping is practically negligible. This can be seen particularly by the presence of higher harmonics in the graph of fig. 28c.

Fig. 29 shows the same quantities, however in this system the spring stiffness was lowered by a factor 10. The basic system has an Eigen-frequency of about 0.5 Hz; the stabilizer has an Eigen-frequency of about 9 Hz, while the stabilized new frequency amounts to about 3 Hz.

Fig. 30 shows basically the same construction, in which the spring stiffness is reduced by a factor 2000. It will be clear from fig. 30c that the forces in the springs are negligible, which means that there is not any substantial stabilization. From figs. 28, 29 and 30 it will be clear that the best stabilization is obtained according to fig. 29. Therefore, it appears that somewhere exists an optimum in the choice of parameters. This optimum is determined by the spring stiffness, the mass and the damping of the stabilizing system.

It should be noted that the invention has a much broader scope and can be applied in more ways than the embodiments discussed above. For example, in the field of oscillation insulation of apparatus such as a record player; automobiles may be provided with a dynamic compensator embodying the invention, which may replace the conventional shock absorber.

Reference is furthermore made to a further technical

-16-

field such as acoustics. Herein the above-mentioned leverage having the form of a transformer in an electric arrangement is represented by a horn system. A resonance circuit may be designed in the form of Helmholtz resonator. Thus even in acoustics the invention can be applied.

An affiliated technical field is electro-acoustics, i.e. the field of the electro-acoustic transducers. A possible application may consist in compensating troublesome Eigen-frequencies of, for example, construction panels. Comparable herewith is the potential application of dynamic compensator embodying the invention for compensating oscillations of airplane wings, air plane panels and so on, which may give rise to metal fatigue and hence to hazardous situations.

Reference is made to the possibility of using a hybrid system i.e. a system that is not solely electric, not solely acoustic, but an electric and acoustic combination. Therefore, an acoustic system with an active electronic oscillation compensator lies within the scope of the present invention.

-1-

## Claims

1. A system having at least one Eigen-frequency comprising at least one first mass or correspondingly arranged analogs thereof urged by first spring means to a state of equilibrium and provided with stabilizing means, characterized in that the stabilizing means are designed in the form of at least one second mass or correspondingly arranged analogs thereof arranged on the first mass or at least one of the first masses and urged by second spring means to a state of equilibrium with respect to the former.

2. A system as claimed in claim 1, characterized in that the stabilizing means have at least one Eigen-frequency which considerably exceeds the Eigen-frequency of the system.

3. A system as claimed in claim 1 or 2, characterized in that the stabilizing means are coupled with the system through a leverage or analog thereof.

4. A system as claimed in anyone of the preceding claims, characterized in that the stabilizing means exhibit low dissipation.

5. A system as claimed in anyone of the preceding claims, in particular for regulating a periodically changing force or speed or analogs thereof, characterized by means for exerting a force or imparting speed or analogs thereof on the stabilizing means in synchronism and with phase coupling with the force or speed or analogs thereof to be regulated.

6. A trailer to be drawn by means of a pivotable coupling by a motor vehicle and provided with stabilizing means for suppressing relative rotation and translation of the trailer and the motor vehicle, characterized in that the stabilizing means are constructed in the form of a mass movably arranged on the trailer and urged by spring means to a state of equilibrium.

7. A trailer as claimed in claim 6, characterized in that the mass comprises at least one mass element arranged at the free end of a pivotable rod.

8. A trailer as claimed in claim 6, characterized in that the mass is constructed in the form of a fly-wheel.

9. A trailer as claimed in claim 8, characterized in that the mass distribution of the fly-wheel is adapted to the inertia moment distribution of the trailer.

10. A trailer as claimed in anyone of claims 6 to 9, characterized in that the spring means comprise at least one helical spring.

11. A trailer as claimed in claim 10, characterized by two helical springs having opposite senses of winding.

12. A trailer as claimed in anyone of claims 6 to 8, characterized in that the spring means comprise at least two linear springs acting in opposite senses.

13. A trailer as claimed in anyone of claims 6 to 8, characterized in that the mass is solely carried by the spring means.

14. A trailer as claimed in anyone of claims 6 to 13, characterized in that the centre of curvature of the path of the mass is invariably located between the motor vehicle and the mass.

15. A trailer as claimed in claim 14, characterized in that the mass is guided inside a tube of predetermined shape.

16. A trailer as claimed in claim 15, characterized in that the tube can move upwards and downwards and is urged by spring means to a state of equilibrium.

---

0098657

FIG.1a

FIG.1b

FIG.2a

FIG.2b

FIG.3a

FIG.3b

FIG.4

FIG.5

FIG.6

FIG.7

0098657

FIG.8a

59

FIG.8b

60

"2/ℓ"

58

FIG.9a

FIG.9b

FIG.10

1,0
0,8
0,6
0,4
0,2

0  1  2  3  4  t(s)

61

FIG.11

65

62

63

64

66

69

73

71

67

68

70

72

74

"3/..."

FIG.12

75  76

77  78

79

80

FIG.13

84  82  81  83  85

FIG.14

84  82  81  83  85

86  88 90  89  87

11831-2

0098657

"4/3"

FIG.15

FIG.16

FIG.17

0098657

FIG.18

"5/𝒞"

FIG.19

FIG. 20

FIG.21

FIG.22

0098657

" 6/ "

FIG. 23

FIG. 24

FIG. 25

FIG. 26

0098657

FIG.27

0098657

FIG.28

(a)

(b)

(c)

FIG.29

(a)

(b)

(c)

FIG.30

(a)

(b)

(c)

European Patent
Office

**EUROPEAN SEARCH REPORT**

Application number

EP  83 20 0977

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 757 895  (FEND)<br><br>* Whole document *<br>--- | 1,4-6,<br>10,12,<br>15 | B 62 D  37/04<br>F 16 F  7/10<br>E 04 B  1/98<br>E 04 H  12/00<br>E 01 F  7/06<br>B 63 B  39/02 |
| X | DE-A-2 807 972  (FEND)<br><br>* Whole document *<br>--- | 1,4-6,<br>10,12,<br>14,15 | |
| X | FR-A-  999 128  (REDONI)<br><br>* Whole document *<br>--- | 1-3,7,<br>8,10,<br>13 | |
| A | GB-A-1 075 262  (GIDDINGS & LEWIS)<br>*  Page 3, line 73 - page 5, line 54; figures 1-13 *<br>--- | 1,2,4,<br>13 | |
| A | CH-A-  173 236  (PERMO)<br><br>* Whole document *<br>--- | 1,4,10<br>-12 | **TECHNICAL FIELDS SEARCHED (Int. Cl. ³)**<br><br>B 62 D<br>F 16 F |
| A | US-A-2 797 931  (HANS)<br><br><br>* Whole document *<br>--- | 1,3,4,<br>7,10,<br>12,15,<br>16 | |
| A | US-A-3 602 525  (MOULTON)<br><br><br>*  Column  1, line 40 - column 2, line 60; figures 1-4 * | 1,3-5,<br>7,10,<br>12 | |

The present search report has been drawn up for all claims

| Place of search | Date of completion of the search | Examiner |
|---|---|---|
| THE HAGUE | 26-09-1983 | ESPEEL R.P. |

European Patent Office

**EUROPEAN SEARCH REPORT**

Application number

| | **DOCUMENTS CONSIDERED TO BE RELEVANT** | | Page  2 | |
|---|---|---|---|---|
| Category | Citation of document with indication, where appropriate, of relevant passages | Relevant to claim | CLASSIFICATION OF THE APPLICATION (Int. Cl. ³) | |
| A | DE-A-1 917 098   (GEORGE)  <br><br> * Whole document * <br> --- | 1,3,4, 7,10, 12 | | |
| A | FR-E-   39 373   (PRINZ)  <br><br> * Whole document * <br> --- | 1,3-5, 7,10, 12 | | |
| A | US-A-2 838 137   (WALLERSTEIN)  <br><br> * Whole document * <br> --- | 1,3,4, 8-10 | | |
| A | DE-C-  623 214   (KRAUSE) <br> *  Page 2, line  79 - page 3, line 59; figures 1,8 * <br> --- | 1,4,8 | | |
| A | BE-A-  509 164   (STABILEX)  <br><br> --- | | TECHNICAL FIELDS SEARCHED (Int. Cl. ³) | |
| A | BE-A-  496 016   (LEMAITRE)  <br><br> --- | | | |
| A | DE-A-2 610 212   (MÜLLER-BBM)  <br><br> --- | | | |
| A | US-A-3 259 212   (NISHIOKA)  <br><br> --- | | | |
| A | US-A-2 016 207   (LINDENBERG)  <br><br> ---           -/- | | | |

The present search report has been drawn up for all claims

| Place of search <br> THE HAGUE | Date of completion of the search <br> 26-09-1983 | Examiner <br> ESPEEL R.P. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503  03 82

0098657

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-1 821 816 (QUAAS) | | |

--- 

-----

TECHNICAL FIELDS
SEARCHED (Int. Cl. 3)

The present search report has been drawn up for all claims

| Place of search THE HAGUE | Date of completion of the search 26-09-1983 | Examiner ESPEEL R.P. |
|---|---|---|